# EUROPEAN PATENT APPLICATION

(11) **EP 3 995 926 A1**
(43) Date of publication of application: **11.05.2022**
(21) Application number: 21206689.8
(22) Date of filing: 05.11.2021
(51) Int. Cl.: G05D 1/02

(54) **METHOD FOR IDENTIFYING A TRAJECTORY IN A PLANTATION OF FRUIT TREES, SUCH AS AN ORANGE ORCHARD**

(30) Priority: 05.11.2020 IT 202000026470
(71) Applicant: CNH Industrial Italia S.p.A., 10135 Torino (IT)
(72) Inventor: DI CECILIA, Luca, 41123 Modena (IT); INFANTINI, Mauricio B., 18048-130 Sorocaba (BR)
(74) Representative: CNH Industrial IP Department

(57) **Abstract**

A method for identifying a trajectory overlapped to a crop row centerline (TAC) of a plantation to be worked, in particular of oranges, grapes, coffee, almonds and similar row planted crops, by means of a 3D sensor (3DS), the method including (Step 1) acquisition of a 3D point cloud from said 3D sensor corresponding to reflections picked up by said 3D sensor (3DS) from a scenario in front of the vehicle (V), fitting points to obtain a pseudo-ellipsoid interpolating curve (C1) on two-dimensional map from the 3D point cloud, (Step 5) identification of a peak (PK1) associated to said pseudo-ellipsoid interpolating curve and calculating a lateral misalignment (OTE) between such peak (PK1) and a vertical line of the two-dimensional map corresponding to the vehicle centerline (VC), (Step 6) controlling a vehicle trajectory such as to minimize said distance.

## Description

### Field of the invention

The present invention relates to autonomous drive in the agricultural field.

### Description of the prior art

Mechanical harvesting of oranges and similar row crops plantations (e.g. coffee, grape, almonds, olives) is not a simple task, since the orange harvester can damage the trees by breaking their branches.

The present applicant has developed four wheeled vehicle shaped as a building portal capable to move passing over crop rows. In particular, in operation, two wheels W are arranged on one side of the crop row and further two wheels are arranged one the opposite side of the same crop row, with a sort of bridge connecting all the wheels, such that the vehicle defines a central tunnel capable to pass over the crop row.

Hydraulic motors are arranged to drive each wheel such that no driveshaft is implemented, which could physically interfere with the crop row.

Two substantially vertical rotors R are arranged in such a way to harvest the crop row on both its the opposite sides, while the vehicle moves over the crop row itself.

The rotors are capable of rotating/vibrating at different RPMs in order to detach the fruits, for example oranges, from the branches of the trees alignment.

Usually, the driver cabin is arranged on one side of the vehicle such that to remain sufficiently low to be easily reached by the driver. Due to the mismatch between the position of the driver cabin and the centerline of the vehicle, the driver has not an optimal viewpoint to perfectly match the centerline of the vehicle over the trees alignment.

One of the most common damages caused on trees is the trunk and thick branches breaking, due to the two rotors movement. This can lead the trees to develop diseases, which can also bring the plant to death.

Often the trunks are broken due to the vehicle misalignment, due to the too short distance between one of the machine rotors and one side of the trees row.

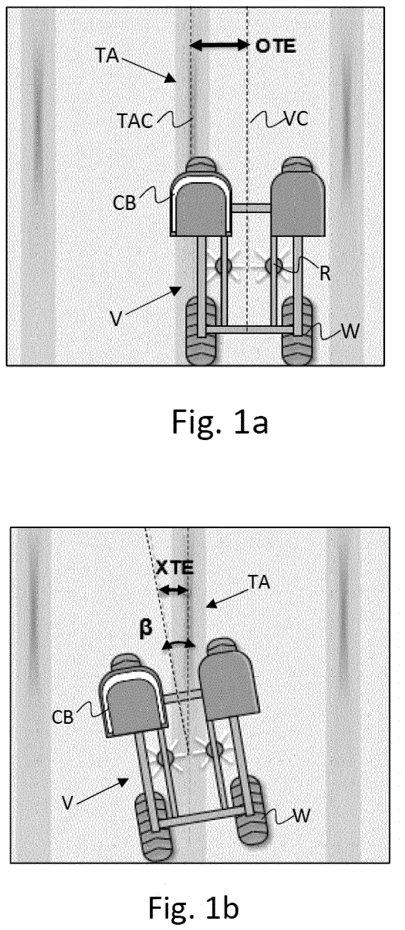

Figure 1a discloses a common situation, where the vehicle centerline VC has a lateral misalignment OTE (off-track error) from the trees alignment centerline TAC.

In other words, the vehicle centerline VC and the trees alignment centerline TAC are reciprocally parallel but with a lateral shift.

Figure 1b discloses a different situation where the vehicle has an angular misalignment (cross track error XTE), which means that the vehicle centerline VC and the trees alignment centerline TAC are not parallel and define an incidence angle β.

Nowadays, there is an increasing need for agricultural machines capable of performing autonomous operations, due to a lack of specialized labour capable of handling such agricultural vehicles.

### Summary of the invention

Therefore, it is the main object of the present invention to provide a solution for solving at least the lateral misalignment OTE.

According to the present invention, a 3D sensor is used for imaging the field in front of the vehicle, in order to recognize the canopy of a trees alignment.

The 3D sensors could be a LiDAR, a stereo camera (VIS, NIR, SWIR, LWIR), a RADAR, an ultrasonic sensors array, or any 3D sensor or sensor set in general, capable to produce a 3D point cloud. Preferably, a 3D multi-layer point cloud sensor is implemented.

The 3D sensors are capable to permit the acquisition of a so-called "point cloud" of the scene ahead, where each point represents a spot where the (laser) light (in the case of LiDAR) is back reflected by a part of an object in the scene (e.g. a leaf, a rock, a branch). The better the resolution of the sensor, and the higher is the number of layers that the 3DS is capable of collecting. This leads to a denser and richer point cloud that is available for post-processing. According to the invention, the point cloud is sliced according to at least one transversal layer with respect to the vehicle centerline and analyzed to recognize the canopy of the worked tree alignment.

It should be clear that a combination of one of such sensor with a 2D Camera (VIS, NIR, SWIR, LWIR) is also possible, in order to enhance the 3D point cloud with a visual image that can be analyzed exploiting standard image processing techniques.

The 3D sensor is placed in a fixed and known position on the vehicle roof, preferably at the front and with the imaging axis overlapped with the vehicle centerline, namely the longitudinal axis arranged in the middle of the right and left wheels.

According to the present invention, the transversal section of an orange tree can be approximated with a pseudo-ellipsoid. In fact, the tree height and its width are more or less comparable, and this assumption can be exploited for estimating the peak position, corresponding to the trunk position.

According to the present invention with "pseudo-ellipsoid" an ellipsoid, a circumference, a catenary, a Gaussian, a Polynomial is meant. It should be considered that the two-dimensional maps can be stretched or manipulated, such that the tree canopy pass form the ellipsoidal shape to an almost circular shape and vice versa.

According to a preferred embodiment of the invention, a windowing is applied to the point cloud slice such that to cut the lateral portions. Then the best curve fit is searched.

When the fitting is considered as acceptable, through a fitting quality index, the fit-curve is acquired and its maximum point, according to the ordinate axis, is acknowledged as the center of the crop line, which indicate the trees peaks and the corresponding trunks position.

Then the lateral mismatch is computed as the difference between the centerline of the vehicle and the center of the detected crop row, which corresponds to maximum point of the fitting curve, in a metric form.

Preferably, the process is iterated for a certain number of transversal slices, at least two, and the lateral mismatch values are computed for each slice. Then the mismatch values for each transversal slice, with respect to the longitudinal vehicle axis, are used to perform fast correction of the vehicle displacement.

According to a preferred embodiment of the invention, also the cross track error β (XTE) is identified. Such track error is identified by using two transversal slices at known different distances and calculating the arctan (*ε*/*dist*) where ε is algebraic difference of the lateral misalignment OTE and *dist* is the distance between the slices.

With "worked crop row" is meant the crop row subject to the vehicle harvesting.

According to a preferred embodiment of the invention, the steering is controlled in such a way that the current vehicle direction is overlapped with that of the crop row.

According to another embodiment of the invention, also the lateral portions of the scanned point cloud are used. In particular, further fittings are performed on the lateral portions of the scanned point cloud and the corresponding peaks are identified. Such peaks are used in such a way the distances between the left peak with respect to the vehicle centerline and the right peak with respect to the vehicle centerline are kept to be equal.

The delta/2 of the left and right distances between the lateral crop row centerlines and the vehicle centerline is used to trace a further centerline of the worked crop row, which can be used to correct/weight the first centerline of the worked crop row, found with the first curve fitting procedure.

According to another preferred embodiment, the distance between the crop rows is manually inserted by the operator, according to the rows spacing of the specific field, and exploited to correct/weigh the first centerline of the worked crop row found with the second curve fitting procedure, related to at least one of the lateral rows. Preferably, the Agricultural Vehicle is also equipped with a GPS antenna, that provides global coordinates, enables mapping capability, and also permits to trace a vehicle direction movement. This aspect could represent a sort of fallback solution when one or more trees are missing or simply not detected by the 3D sensor. Often the tree rows are planted by recurring to GPS positioning, therefore, the tree alignments are approximately straight. This means that when the 3D sensor fails, the tracking of the vehicle position can be exploited to maintain the moving direction at least till the 3D sensor restarts to recognize the trees canopy.

These and further objects are achieved by means of the attached claims, which describe preferred embodiments of the invention, forming an integral part of the present description.

### Brief description of the drawings

The invention will become fully clear from the following detailed description, given by way of a mere exemplifying and non limiting example, to be read with reference to the attached drawing figures, wherein:
- Figs. 1a and 1b show two possible situations about misalignment between the agricultural vehicle and a crop row of fruit trees;
- Fig. 2 discloses a side view of an agricultural vehicle modified according to the present invention;
- Fig. 3 discloses a slice of the point clouds scanned by means of a 3D sensor arranged on the vehicle front;
- Fig. 4 shows two steps of an iteration of the method of the present invention in order to calculate a misalignment of the vehicle center line with respect to a crop row;
- Figs 5 and 6 disclose the exploiting of the lateral views of the 3D Sensor in order to identify lateral crop rows useful to correct the previously detected central crop row line;
- Fig. 7 discloses the implementation of the lateral crop distances, for the calculation of the lateral misalignment;
- Fig. 8 discloses another implementation of the present invention considering two (or more) transversal slices H1, H2; and Fig. 8bis discloses a more general case to construe a geometrical formula to calculate an angular misalignment XTE,

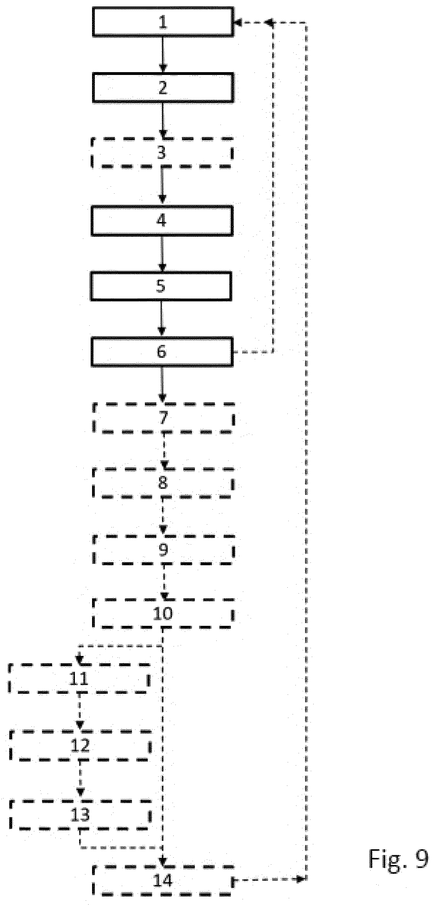

- Fig. 9 discloses an example of flow diagram of the present method. Dashed blocks are optional.

According to the present description crop row is used to indicate not only an alignment of fruit trees but also its centerline, especially when a mismatch with a vehicle centerline is considered.

The same reference numerals and letters in the figures designate the same or functionally equivalent parts or functions.

According to the present invention, the term "second element" does not imply the presence of a "first element", first, second, etc.. are used only for improving the clarity of the description and they should not be interpreted in a limiting way.

### Detailed description of the preferred embodiments

The present invention proposes a self-alignment algorithm of an agricultural vehicle in particular of the kind adapted to pass over a row of trees. Therefore, the vehicle is conformed as described above, with two rotors R arranged to shake the branches on both sides of the same trees row, while the vehicle moves along the crop row.

According to the invention, a 3D sensor is arranged on the top and at front of the vehicle in order to scan the environment in front of the vehicle.

Preferably, but not necessarily the 3D sensor is arranged in the centreline of the vehicle to obtain an aligned point cloud of the environment in front of the vehicle.

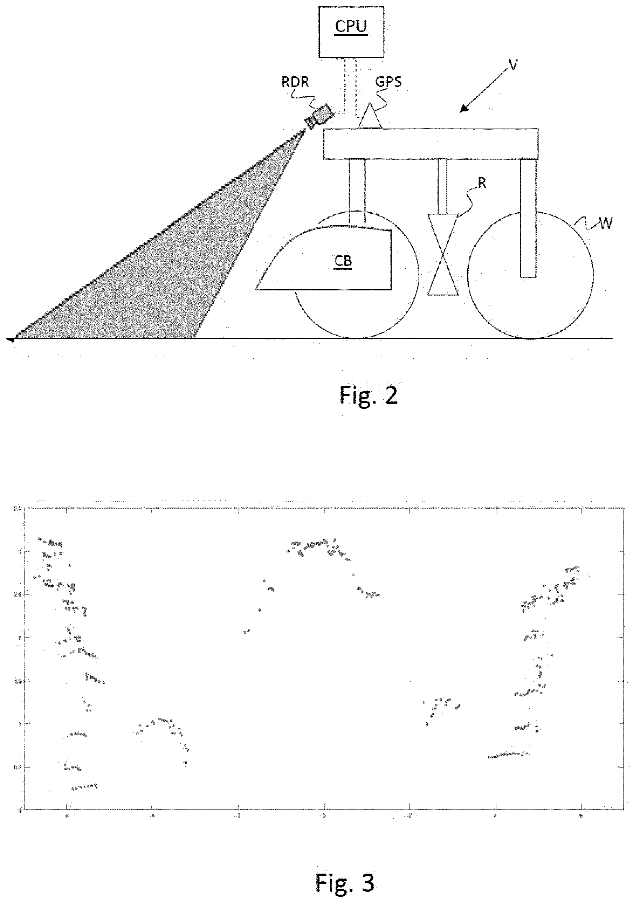

The point cloud of Figure 3 is the output of a single layer scan of a LiDAR, which is usually multi-layered, projected on its transverse plane. In the following such layer represents the slice obtained at a predetermined distance of the vehicle, perpendicularly to the vehicle centreline.

It should be understood that the terms "layer" and "slice" are used in an interchangeable way.

According to the present invention, the identification of the correct vehicle trajectory, is carried out by identifying the crop row centerline TAC of a plantation to be worked by means of the 3D sensor 3DS interfaced with processing means CPU of an agricultural vehicle.

The method comprises the following steps in the same order:
- (Step 1) acquisition of a 3D point cloud from said 3D sensor corresponding to reflections picked up by said 3D sensor (3DS) from a scenario in front of the vehicle V,
- (Step 2) processing of said 3D point cloud to obtain a two-dimensional map as a slice of the point cloud according to a cutting plane of the 3D point cloud, transversal to a vehicle centerline at a first predetermined distance H1 from the vehicle front portion,
- (Step 4) first fitting to obtain a first pseudo-ellipsoid interpolating curve C1 on the two-dimensional map,
- (Step 5) identification of a peak PK1 associated to said pseudo-ellipsoid interpolating curve and calculating a misalignment OTE between such peak PK1 and a vertical line of the two-dimensional map corresponding to the vehicle centerline VC,
- (Step 6) controlling a vehicle trajectory such as to minimize said distance.
When the 3D sensor is perfectly placed on the vehicle center line, the vehicle center line corresponds to the vertical center line drawn in the two-dimensional map, otherwise a fixed offset is expected.

It is clear that the 3D sensor can be arranged on one side of the vehicle, in any case parallel arranged to the longitudinal development of the vehicle. For example, if the sensor is shifted to the right, the vertical line of the two-dimensional map that corresponds to the vehicle's centerline is proportionally shifted to the left of the two-dimensional map. These are simple concepts and within the reach of the person skilled in the art.

It is clear that only one vertical line in the dimensional map corresponds to the vehicle center line to which the 3D sensor is associated.

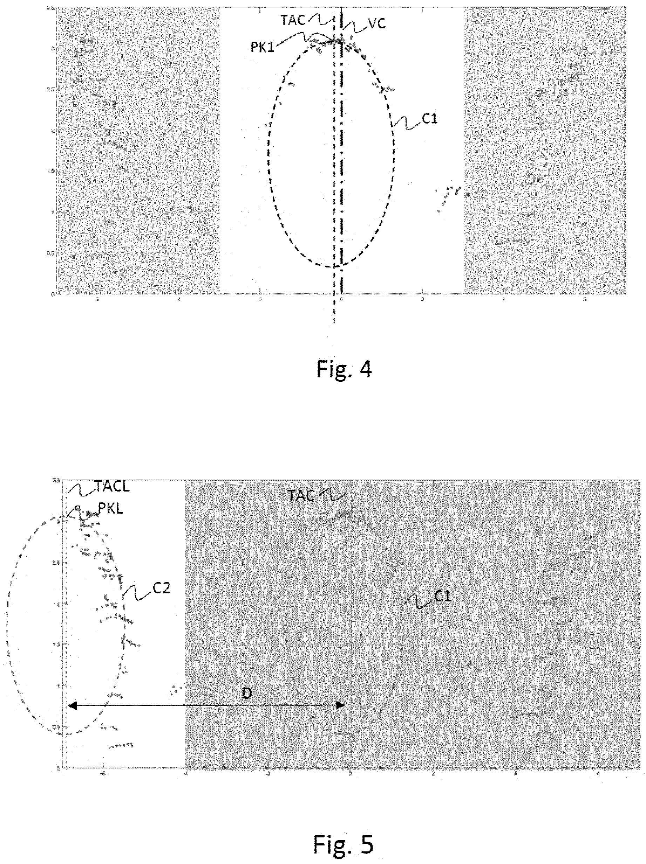

In order to simplify the understanding of the procedure, in the figures 4 - 6 the centerline of the tree alignment TAC is traced passing for the corresponding peak PK1. Preferably, a central windowing (Step 3) of the two dimensional map is carried out immediately before the first fitting step Step 4, such that to cut lateral portions of the two dimensional map.

It is assumed that the driver of the vehicle contributes with a preliminary alignment of the vehicle with the crop row to be worked and then the autonomous driving system is able to identify the appropriate trajectory to follow in the field.

### Example 1

In addition, the lateral crop rows can also be exploited to better determine the correct trajectory, using two estimations of the cross-track error β (or XTE) to be weighted; however, the following procedures are optional.

According to a preferred embodiment of the invention, the following step sequence is carried out:
- Step 7 first lateral windowing such that to identify a corresponding first lateral crop row, for example on the left (or the right) of the worked crop row,
- Step 8 second fitting to obtain a second pseudo-ellipsoid interpolating curve C2 on the two dimensional map,
- Step 9 identification of the second peak (PKL,PKR) associated to said second pseudo-ellipsoid interpolating curve and, only for better understanding, tracing a second vertical straight line (TACL, TACR) identifying said first lateral crop row centerline,
- Step 10 acquisition of a distance D between crop rows, worked and left (or right), and calculating a further first centerline FTAC of the worked crop row on the basis of the second peak and said distance D,
- Step 14 correcting/weighting said first centerline TAC with said further first centerline FTAC.

Therefore, in case the worked row has new or dead trees, at least one lateral row is exploited to trace or correct the first.

It should be considered that the 3D sensor horizontal field of view may not be sufficient to see both the lateral crop rows.

In addition, it should be considered that when the first and last crop rows are worked, only one lateral crop row can be identified. Therefore, in both cases the preliminary knowledge of the distance D between rows could be useful to improve the identification of the correct trajectory.

### Example 2

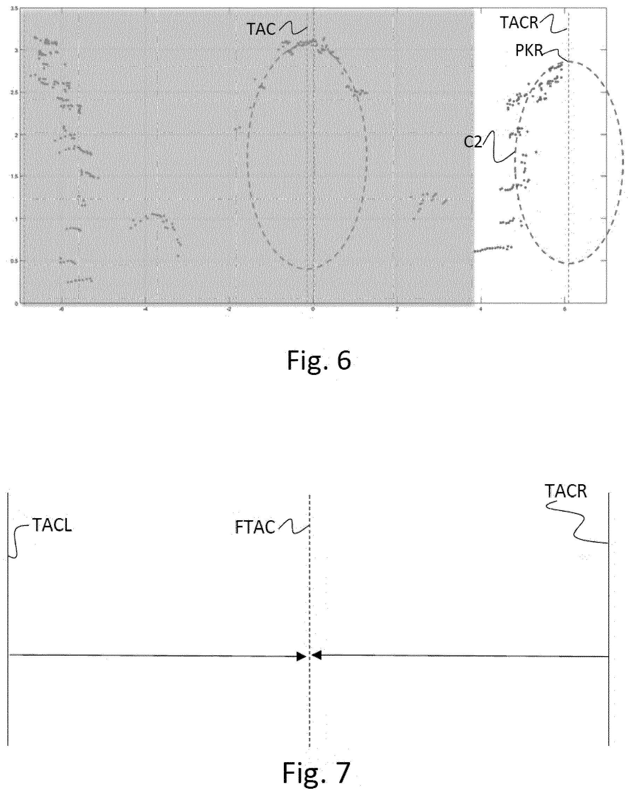

When both the lateral crop rows are available AND seen by the 3D sensor, a further embodiment is proposed, in particular, the method comprises the following step sequence
- Step 7 first lateral windowing (see figure 5) such that to identify a corresponding first lateral crop row,
- Step 8 second fitting to obtain a second pseudo-ellipsoid interpolating curve C2 on the two-dimensional map,
- Step 9 identification of the second peak PKL, PKR associated to said second pseudo-ellipsoid interpolating curve (and only for better understanding tracing a second vertical straight line TACL, TACR) identifying said second lateral crop row centerline,
- Step 10 second lateral windowing (see figure 6) such that to identify a corresponding second lateral crop row, opposite to the first lateral crop row with respect to the worked crop row,
- Step 11 third fitting to obtain a third pseudo-ellipsoid interpolating curve (C2) on the two-dimensional map,
- Step 12 identification of the third peak PKR, PKL associated to said third pseudo-ellipsoid interpolating curve (and only for better understanding tracing a third vertical centerline TACR, TACL) identifying said second lateral crop row,
- Step 13 calculation of a further first centerline (FTAC) in the middle between the second and third centerlines,
- Step 14 correcting/weighting said first centerline (TAC) with said further first centerline (FTAC).

An example of the present embodiment is disclosed with the aid of figure 7.

It should be clear that all the embodiments can be implemented in the same autonomous drive system and autonomously selected according to the available data.

For example, the control means CPU can acquire manually the average distance D between rows or can acquire it from satellite maps in conjunction with a GPS antenna associated to the vehicle, such that the control means are suitable to acquire the satellite map around the vehicle position and calculate a plurality of interpolating lines over the crop rows in such a way to extract the relating inter-distance D. The 3D imaging system is pre-calibrated in order to determine the (Field Of View) FOV and the actual measured distance on the ground, facing down at an angle, e.g. 25° tilting.

Preferably the fitting is considered as acceptable when a fitting index (goodness of fit, G.O.F.) exceeds a predetermined threshold, e.g. 0.8.

According to the present description the peaks PK1, PK2... are the maximum of the respective fitting curve in the ordinate axis of the point cloud as clearly disclosed in the figures 4 - 6.

As disclosed in the summary of the invention, a GPS positioning system can be exploited alternatively or in combination with the lateral view in order to face situations in which some trees are absent, because dead or just replaced, in the worked row.

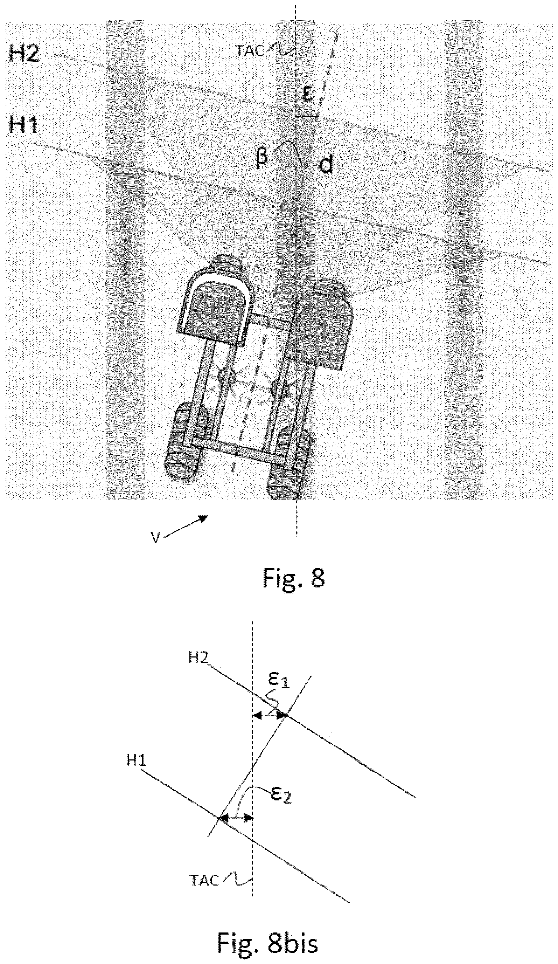

According figure 8 and 8bis it is clear that the present invention is implemented for two layers H1 and H2. While in figure 8, the first mismatch error (on H1) is zero and second mismatch error (on H2) is ε, in figure 8bis there are two errors ε₁, ε₂.

The mismatch angle β can be calculated as arctan (ε/dist) where ε is algebraic difference of the lateral misalignments OTE and dist is the distance between the slices H1 and H2. For example, in figure 8 the first mismatch is zero and the second is ε, therefore the calculation is immediate. According to figure 8bis, the situation should be forced to that of figure 8, thus ε = (ε₁ - (-ε₂)) = ε₁ + ε₂.

When instead both the errors are positive, because there is a strong right lateral mismatch ε = (ε₁ - (+ε₂)) = ε₁ - ε₂. Two (or more) 3D sensors can be arranged to obtain multiple point clouds in order to calculate the mismatch values between vehicle centreline and crop row centreline at two subsequent horizontal positions H1, H2 as disclosed in figure 8.

It should be clear that, when the vehicle is pre-aligned with a worked row, the angular mismatch XTE is corrected automatically by the recursive correction of the lateral mismatch OTE.

The vehicle moving direction can be adjusted both by
- subsequent image/point-cloud processing outputs (Steps 1 - 6), and
- monitoring the heading angle estimated on the basis of vehicle positions acquired by the GPS,
such that to provide a feedback of the actual steering that the machine made (assuming that the GPS antenna is positioned properly, i.e. on the longitudinal vehicle axis Preferably, the GPS axis matches the longitudinal agricultural vehicle axis.

The GPS antenna provides both coordinates (Latitude, Longitude) as well as azimuth angle, which is the angle with respect to the magnetic north, and ground speed, inertial parameters (yaw, pitch, roll).

Preferably, the 3D Sensor have a wide Field Of View (FOV) in order to include at least the central and two lateral rows within the picture.

The present invention can be advantageously realized by means of a computer program which comprises coding means for carrying out one or more steps of the method, when this program is executed on a computer. Therefore it is intended that the scope of protection extends to said computer program and further to computer readable means comprising a recorded message, said computer readable means comprising program coding means for carrying out one or more steps of the method, when said program is run on a computer. Implementation variants of the described non-limiting example are possible, without however departing from the scope of protection of the present invention, including all the equivalent embodiments for a person skilled in the art, to the content of the claims.

From the above description, the person skilled in the art is able to realize the object of the invention without introducing further construction details.

## Claims

1. A method for identifying a trajectory overlapped to a crop row centerline (TAC) of a plantation to be worked, in particular of oranges, grapes, coffee, almonds and similar row planted crops, by means of a 3D sensor (3DS) interfaced with processing means (CPU) of an agricultural vehicle (V), the method comprising the following steps in the same order:
- (Step 1) acquisition of a 3D point cloud from said 3D sensor corresponding to reflections picked up by said 3D sensor (3DS) from a scenario in front of the vehicle (V),
- (Step 2) processing of said 3D point cloud to obtain a two-dimensional map as a slice of the point cloud according to a cutting plane of the 3D point cloud, transversal to a vehicle centerline at a first predetermined distance (H1) from the vehicle front portion,
- (Step 4) first fitting to obtain a first pseudo-ellipsoid interpolating curve (C1) on the two-dimensional map,
- (Step 5) identification of a peak (PK1) associated to said pseudo-ellipsoid interpolating curve and calculating a lateral misalignment (OTE) between such peak (PK1) and a vertical line of the two-dimensional map corresponding to the vehicle centerline (VC),
- (Step 6) controlling a vehicle trajectory such as to minimize said distance.

2. Method according to claim 1, further comprising a first windowing (Step 3) of the two dimensional map immediately before the first fitting (Step 4) step, such that to cut lateral portions of the two dimensional map.

3. Method according to any one of claims 1 or 2, further comprising the following step sequence
- (Step 7) first lateral windowing such that to identify a corresponding first lateral crop row,
- (Step 8) second fitting to obtain a second pseudo-ellipsoid interpolating curve (C2) on the two dimensional map,
- (Step 8) identification of a second peak (PKL,PKR) associated to said second pseudo-ellipsoid interpolating curve identifying said first lateral crop row (TACL, TACR),
- (Step 9) acquisition of a distance (D) between consecutive crop rows and calculating a further first centerline of the worked crop row on the basis of said second peak and said distance,
- (Step 14) correcting/weighting said first centerline (TAC) with said further first centerline (FTAC).

4. Method according to any one of claims 1 or 2, further comprising the following step sequence
- (Step 7) first lateral windowing such that to identify a corresponding first lateral crop row,
- (Step 8) second fitting to obtain a second pseudo-ellipsoid interpolating curve (C2) on the two dimensional map,
- (Step 10) identification of a second peak (PKL,PKR) associated to said second pseudo-ellipsoid interpolating curve identifying said second lateral crop row (TACL, TACR),
- (Step 11) second lateral windowing such that to identify a corresponding second lateral crop row, opposite to the first lateral crop row with respect to the worked crop row,
- (Step 12) third fitting to obtain a third pseudo-ellipsoid interpolating curve (C2) on the two dimensional map,
- (Step 12) identification of a third peak (PKR,PKL) associated to said third pseudo-ellipsoid interpolating curve identifying said second lateral crop row (TACR, TACL),
- (Step 13) calculation of a further first centerline (FTAC) in the middle between said second and third peaks,
- (Step 14) correcting/weighting said first centerline (TAC) with said further first centerline (FTAC).

5. Method according to any one of the previous claims, wherein the execution of the steps is recursive.

6. Method according to any one of the previous claims, further comprising the step of acquisition iteratively vehicle positions by means of GPS means such that to trace a vehicle direction movement and a following step of maintaining the vehicle motion aligned with said direction, at least when said acquisition of a 3D point cloud does not present sufficient reflection points and/or when said fitting step (Step 4) is unsatisfactory.

7. Computer program comprising program coding means for realizing all steps (1 - 6, 1 - 14) of any of the claims from 1 to 6, when said program is run on a computer.

8. Computer-readable means comprising a recorded program, said computer-readable means comprising program encoding means suitable for realizing all steps (1 - 6, 1 - 14) of any one of claims 1 to 6, when said program is run on a computer.

9. Autonomous drive system comprising a 3D sensor and processing means operatively connected to said 3D sensor, wherein said processing means are configured to control a propulsion, braking and vehicular steering system, wherein said processing means are configured to perform all the steps of any one of claims 1 to 6.

10. An agricultural vehicle comprising a propulsion, braking and steering system and further comprising an autonomous drive system according to claim 9.
